# FASCICULE DE BREVET EUROPEEN

(11) **EP 2 534 934 B1**
(45) Date de publication et mention de la délivrance du brevet: **26.02.2020**
(21) Numéro de dépôt: 12172054.4
(22) Date de dépôt: 14.06.2012
(51) Int. Cl.: A01B 49/02, A01B 49/06, A01B 73/00

(54) **Semoir avec un rouleau de rappui constitué de tronçons décalés**
Sämaschine mit einer Walze, die aus verschobener Abschnitte besteht
Seeder with a roller made of shifted sections

(30) Priorité: 17.06.2011 FR 1155321
(43) Date de publication de la demande: 19.12.2012
(73) Titulaire: KUHN S.A., 67700 Saverne (FR)
(72) Inventeur: Seemann, Michel, 57370 Danne et Quatre Vents (FR); Potier, Philippe, 57370 Veckersviller (FR)
(74) Mandataire: Esch, Esther Evelyne

(56) Documents cités:
- EP-A1- 2 314 140
- WO-A1-2005/115124
- WO-A2-2004/073381
- DE-A1-102004 014 570

## Description

La présente invention se rapporte au domaine technique général du machinisme agricole. L'invention concerne un semoir comportant un châssis s'appuyant sur le sol au moyen d'au moins deux roues et portant un rouleau de rappui disposé transversalement à la direction d'avance et des organes de semis répartis sur toute la largeur de travail. Un semoir avec ces caractéristiques est connu de EP 2 314 140.

Sur une machine connue de ce genre décrite dans le document DE 10 2004 014 570**,** le châssis s'appuie sur le sol au moyen de deux roues. Le châssis porte un rouleau de rappui qui s'étend de manière transversale à la direction d'avance. Il porte également des organes de semis répartis sur toute la largeur de travail et disposés à l'arrière du châssis. Le rouleau de rappui est divisé en une partie centrale et deux parties latérales. La partie centrale est disposée entre les roues et les parties latérales sont disposées de part et d'autre des roues. Ainsi, les parties de rouleau en combinaison avec les roues rappuient toute la largeur de travail du semoir. Les organes de semis s'étendent derrière les roues et le rouleau, compte tenu de la direction d'avance. Les parties de rouleau s'étendent, en vue de côté, sensiblement au même niveau que les roues. La position du rouleau est telle que son enveloppe extérieure arrière s'étend au même niveau que le pourtour arrière des roues. Lors de l'utilisation du semoir, le front du rouleau de rappui s'étend sur une même ligne. De cette manière, l'effort de traction nécessaire pour déplacer le semoir au travail est important. Avec les parties de rouleau de rappui qui sont alignées dans un plan transversal à la direction d'avance, l'effort de traction nécessite l'utilisation d'un tracteur de forte puissance.

La présente invention a pour but de remédier aux inconvénients précités. Elle doit notamment proposer un semoir pour lequel l'effort de traction est réduit.

A cet effet, une importante caractéristique de l'invention consiste en ce que ledit rouleau de rappui est constitué d'au moins deux tronçons, que deux tronçons directement voisins sont disposés de manière décalée l'un par rapport à l'autre compte tenu de la direction d'avance et que le diamètre des roues utilisées par le semoir pour s'appuyer sur le sol est plus important que le diamètre dudit rouleau de rappui. L'utilisation de tronçons permet de décaler le front du rouleau de rappui. Ce décalage dans la direction d'avance permet de réduire l'effort nécessaire pour la traction du semoir et par conséquent une réduction de consommation du tracteur. Le semoir conforme à l'invention peut être utilisé avec un tracteur de puissance moins élevé.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue latérale d'un semoir selon la présente invention, dans une configuration de travail, attelé à un tracteur,
- la **figure 2** représente une vue de dessus d'un semoir dont la largeur de travail s'étend dans le gabarit routier,
- la **figure 3** représente une vue de dessus d'un semoir dont la largeur de travail s'étend au-delà du gabarit routier.

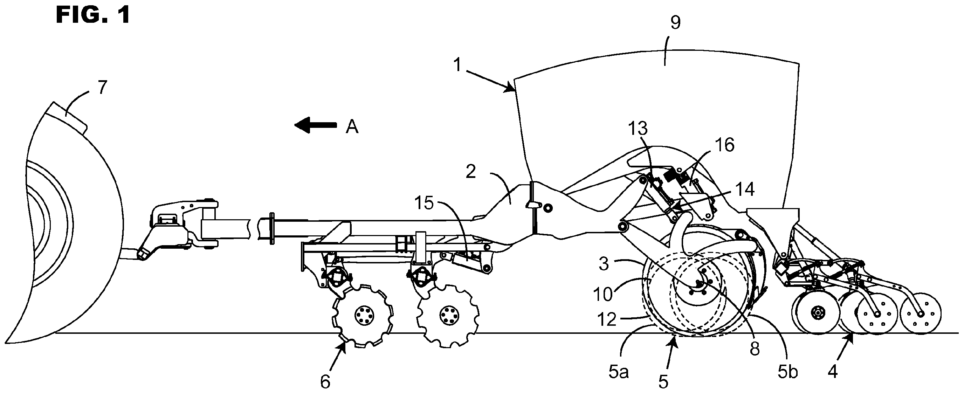

La machine agricole selon l'invention est un semoir (1) en lignes. Ce semoir (1) réalise en un seul passage l'ensemble des travaux pour l'implantation d'une culture c'est-à-dire la préparation, le rappui et le semis. La figure 1 représente un semoir dans la configuration de travail. Le semoir (1) comporte un châssis (2) s'appuyant sur le sol au moyen d'au moins deux roues (3). Le châssis (2) porte des organes de semis (4) et un rouleau de rappui (5). Le châssis (2) porte également des organes de travail (6). Le rouleau de rappui (5) est solidaire du châssis (2) et combine les fonctions de rappuyage et de guidage des organes de travail et de semis (6, 4). Le rouleau de rappui (5) a pour fonction d'émietter et de tasser le lit de semence. Il tasse légèrement le sol pour améliorer le contact des graines avec la terre. Le rouleau de rappui (5) permet donc de niveller et de parfaire l'action des organes de travail (6) en diminuant la taille des mottes en surface.

Un tracteur (7) est amené à déplacer et à animer le semoir (1) suivant une direction d'avance indiquée par la flèche (A). Dans la suite de la description, les notions suivantes "avant", "arrière" et "devant", "derrière" sont définies par rapport au sens d'avance (A). Le semoir (1) est attelé au tracteur (7) par l'intermédiaire d'un timon relié au châssis (2).

Le semoir (1) repose sur le sol au moyen des roues (3) lors du travail, des demi-tours et lors du transport. Les roues (3) roulent sur le sol en pivotant autour d'un axe (8) respectif. Chaque axe (8) est sensiblement horizontal et perpendiculaire à la direction d'avance (A). Le semoir (1) repose également sur le sol au moyen du rouleau de rappui (5) lors du travail et des demi-tours. Le rouleau de rappui (5) roule sur le sol et pivote autour d'un axe longitudinal sensiblement horizontal et perpendiculaire à la direction d'avance (A). Le rappui du lit de semence est effectué sur toute la largeur de travail grâce aux roues (3) qui complètent le travail du rouleau de rappui (5). Le châssis (2) porte une trémie (9) qui s'étend sensiblement à la verticale des roues (3). La trémie (9) permet le stockage de graines qui sont dosées puis acheminées vers les organes de semis (4). Les organes de travail (6) se composent d'outils de préparation du sol qui permettent d'ameublir, d'émotter et de niveler le lit de semis avant d'implanter la semence. La profondeur de travail des organes de travail (6) comme des organes de semis (4) est réglable par rapport au châssis (2). Le réglage est effectué via un dispositif de réglage respectif tel qu'un vérin à double effet. Le réglage est effectué par rapport au châssis (2). Selon une alternative, le dispositif de réglage est un dispositif comparable à un vérin à double effet.

Dans l'exemple de réalisation de la figure 1, les organes de travail (6) sont des disques qui ameublissent le sol en surface. Les disques sont montés sur des éléments en caoutchouc pour s'adapter aux ondulations du terrain et s'effacer en présence de pierres. Les disques sont concaves et crénelés pour une meilleure pénétration dans un sol dur. Les organes de travail (6) assurent une préparation et un nivellement du sol par l'intermédiaire de lames niveleuses (non représentées). Les organes de semis (4) sont par exemple des socs à disques. Les conditions d'utilisation d'un tel semoir sont très diverses quant à la nature et à la consistance du sol et même dans des conditions avec une présence importante de débris végétaux.

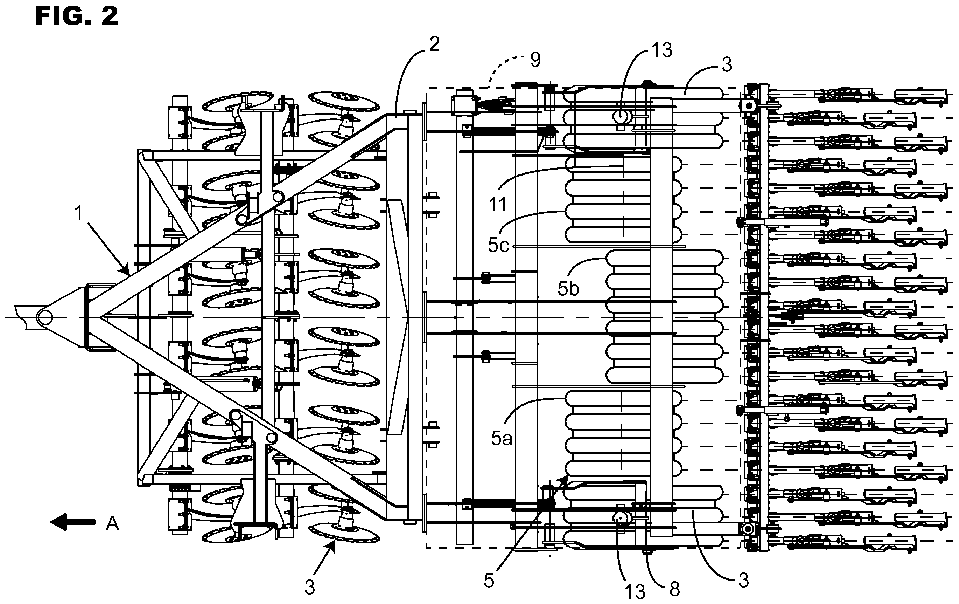

La figure 2 montre un semoir (1) dont la largeur de travail s'étend dans le gabarit routier, c'est-à-dire que la largeur de transport correspond sensiblement à la largeur de travail. Le châssis (2) d'un tel semoir (1) est rigide. Dans la plupart des pays européens et notamment en France, la législation limite la largeur de la machine à 3 mètres et la hauteur à 4 mètres. Ces dimensions correspondent à l'encombrement en largeur et en hauteur du gabarit routier. On remarque que les organes (4, 6) sont disposés transversalement à la direction d'avance (A), sur toute la largeur. Le rouleau de rappui (5) s'étend entre les organes de travail (6) et les organes de semis (4) compte tenu de la direction d'avance (A). Ainsi, les graines seront déposées dans un sol rappuyé puisque chaque organe de semis (4) est disposé dans la trace laissée par le rouleau de rappui (5), ceci est symbolisé par les traits discontinus entre les organes de semis (4) et le rouleau de rappui (5).

Selon une importante caractéristique de l'invention, le rouleau de rappui (5) est constitué d'au moins deux tronçons (5a, 5b, 5c) et deux tronçons (5a, 5b ; 5b, 5c) directement voisins sont disposés de manière décalée l'un par rapport à l'autre compte tenu de la direction d'avance (A). Une telle disposition permet un décalage du front du rouleau de rappui (5) et permet de répartir le poids du semoir (1) sur une plus grande surface au sol. Grâce au décalage des tronçons voisins, la puissance de traction nécessaire par rapport au poids du semoir (1) est réduite. Ce sont les axes longitudinaux des tronçons voisins (5a, 5b ; 5b, 5c) qui sont décalés. Ainsi, un tracteur de plus faible puissance pourra être attelé au semoir (1). Avec un semoir plus facile à tracter, la consommation de carburant du tracteur est réduite. Par ailleurs, le flux de terre et les résidus s'évacuent plus facilement lorsque le rouleau de rappui (5) est formé de tronçons décalés.

Dans l'exemple de réalisation de la figure 2, le rouleau de rappui (5) est constitué de trois tronçons (5a, 5b, 5c). La trémie (9) est représentée en traits discontinus. Les trois tronçons (5a, 5b, 5c) s'étendent entre les roues (3). Les roues (3) rappuient chacune une largeur couvrant trois organes de semis (4). Chaque tronçon (5a, 5b, 5c) présente une largeur plus importante que la largeur des roues (3). Chaque tronçon (5a, 5b, 5c) rappuie une largeur couvrant au moins quatre organes de semis (4). On remarque qu'entre deux tronçons voisins (5a, 5b ; 5b, 5c), il n'y a pas de recouvrement latéral. Les tronçons (5a, 5b, 5c) ne sont pas jointifs, mais ils sont disposés de telle manière à ce que chaque rang de semis est rappuyé. Le décalage entre lesdits deux tronçons voisins (5a, 5b ; 5b, 5c) dans la direction d'avance (A), vu de dessus, est partiel. D'une manière avantageuse, le décalage est inférieur à la moitié du diamètre du rouleau de rappui (5). Selon la figure 2, les tronçons (5a, 5b, 5c) s'étendent, en vue de dessus, entre un plan vertical passant à l'avant des roues (3) et un autre plan vertical passant par l'arrière des roues (3). Avantageusement, les tronçons (5a) sont placés de manière à être alignées avec l'avant des roues (3) et le tronçon (5b) est placé de manière à être aligné avec l'arrière des roues (3). Chaque tronçon (5a, 5b, 5c) est un rouleau de rappui. Dans une alternative, le tronçon (5a, 5b, 5c) est une double roue, lesdites roues sont alignées.

Chaque tronçon (5a, 5b, 5c) comporte une âme sensiblement cylindrique (10) avec un axe longitudinal (11) respectif qui s'étend transversalement et de préférence perpendiculairement à la direction de travail (A). Chaque tronçon (5a, 5b, 5c) présente une bande de roulement (12) autour de l'âme cylindrique (10). La bande de roulement (12) est avantageusement pourvue d'un profil permettant de réaliser des sillons dans le sol dans lesquels seront semées les graines. La bande de roulement (12) est en caoutchouc. L'utilisation d'une bande de roulement (12) réduit considérablement les interventions de maintenance car il n'y a pas de risque de crevaison. Afin d'assurer un rappui homogène sur toute la largeur de travail, les roues (3) et le rouleau de rappui (5), constitué de tronçons (5a, 5b, 5c), présentent le même profil. Selon l'exemple représenté, les tronçons (5a et 5c) rappuie une largeur couvrant quatre organes de semis (4) et le tronçon (5b) rappuie une largeur couvrant six organes de semis (4). Cette configuration est avantageusement symétrique par rapport au plan vertical médian. Selon un autre exemple de réalisation non représenté, chaque tronçon (5a, 5b, 5c) présente la même largeur, cette largeur couvrant cinq organes de semis (4).

A la lumière des figures, les roues (3) qui portent le semoir au transport sont celles situées aux extrémités extérieures de l'encombrement en largeur du gabarit routier. Elles s'étendent aux extrémités extérieures de la largeur hors-tout de manière à respecter le gabarit routier et pour garantir une bonne tenue de route. Elles présentent un diamètre supérieur au diamètre du rouleau de rappui (5). Les tronçons (5a, 5b, 5c) du rouleau de rappui (5) présentent le même diamètre. Grâce au diamètre supérieur, les roues (3) peuvent supporter la charge du semoir (1) au transport. Chaque roue (3) est constituée d'un pneumatique gonflé d'air pour assurer le contact de la roue avec le sol. Le pneumatique est supporté par une jante. La pression de rappui au sol de la roue (3) dépend de la pression de gonflage de son pneumatique. Un gonflage approprié améliore l'adhésion du pneumatique au sol. Pour une circulation sécurisée sur routes, un système de freinage (non représenté) est intégré dans chaque roue (3) du semoir (1). Le système de freinage peut être hydraulique ou pneumatique.

Les roues (3) sont susceptibles de passer d'une position de travail à une position de transport, et inversement, au moyen d'au moins un actionneur (13). Chaque roue (3) est articulée sur le châssis (2) via une articulation d'axe horizontal et perpendiculaire à la direction d'avance (A). L'utilisateur commande l'actionneur (13) ce qui fait pivoter les roues (3) vers le sol pour passer en position transport depuis la position de travail. De préférence, chacune des roues (3) est équipée d'un actionneur (13). L'actionneur (13) est avantageusement un vérin du type à double effet. Grâce aux actionneurs (13), il est possible de régler la hauteur du châssis (2) par rapport au sol. Au transport, seules les roues (3) portent le semoir (1) puisque les tronçons de rouleau sont montés fixes sur le châssis (2) et que ce dernier s'éloigne du sol.

Pour obtenir un rappui homogène sur toute la largeur de travail, il est recommandé que la pression de rappui des roues (3) au sol soit sensiblement identique à la pression de rappui au sol des tronçons (5a, 5b, 5c) du rouleau de rappui (5). Le semoir (1) est équipé, en sus, d'un dispositif de réglage de la pression au sol (14). Ce dispositif de réglage de la pression au sol (14) est associé aux roues (3). Il permet d'adapter la pression au sol des roues (3) à la pression au sol du rouleau de rappui (5). La figure 1 représente le semoir (1) dans une position de travail, l'actionneur (13) s'étend alors dans une position plus ou moins rétractée. La modification de la longueur de l'actionneur (13) est réalisée au moyen de cales placées sur le piston. Les cales limitent la position rétractée du piston dans le cylindre. La pression de rappui est ainsi sensiblement uniforme sur toute la largeur de travail pour des conditions de semis et de germination des graines optimales. Selon une alternative, le réglage mécanique via des cales peut être remplacé par un réglage hydraulique. Les différentes positions peuvent aussi être détectées au moyen de capteurs.

Lors des manœuvres de demi-tours, les roues (3) ainsi que les tronçons (5a, 5b, 5c) restent au sol. Le rappui du sol est régulier sur toute la largeur du semoir (1) puisque le poids est uniformément réparti sur les roues (3) et le rouleau de rappui (5). Un tassement excessif du lit de semence est évité. En bout de champ, ce sont les organes de travail (6) et les organes de semis (4) qui sont dégagés du sol via les dispositifs de réglage (15, 16) correspondants. L'actionneur (13) des roues (3) n'est pas commandé pour le passage de la position de travail à la position de demi-tour, et inversement. Sur la figure 1 sont représentés, un premier dispositif (15) pour la commande de relevage et d'abaissement des organes de travail (6) et un deuxième dispositif (16) pour les organes de semis (4). Ces dispositifs (15, 16) permettent également le réglage de la profondeur de travail.

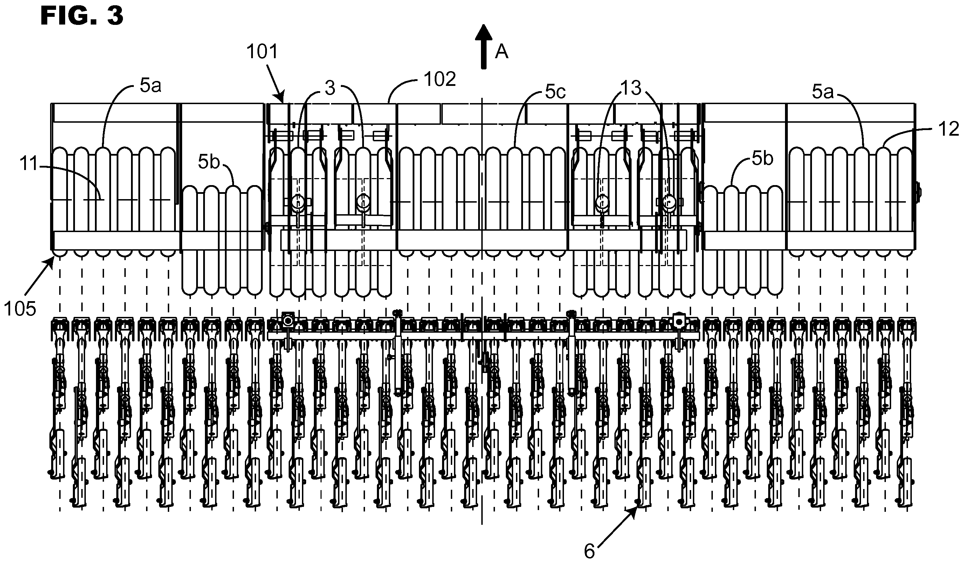

La figure 3 représente un autre exemple de réalisation d'un semoir conforme à l'invention. Ce semoir (101) comporte un certain nombre d'éléments qui ont été décrits précédemment. Ces éléments garderont par conséquent le même numéro de repère et ne seront pas décrits une nouvelle fois. Les éléments comparables à des éléments du semoir (1) seront affectés du même numéro de repère mais augmenté de 100. Ils ne seront décrits que si cela s'avère nécessaire.

Ainsi, le semoir (101) présente une la largeur de travail qui dépasse au-delà du gabarit routier autorisé pour la circulation sur les routes. Le semoir (101) est représenté dans sa position de travail. La figure 3 montre uniquement le rouleau de rappui (105), les roues (3) et les organes de semis (4). Le châssis (102) est conçu de manière à être repliable, il est pourvu d'un châssis central et de parties latérales. Pour le transport, les parties latérales sont déplacées de manière à ce que le semoir (101) respecte la législation réglementant la circulation sur la voie publique. Comme ce semoir (101) présente une grande largeur de travail, il repose au sol via quatre roues (3). Chaque roue (3) est associée à un actionneur (13) permettant de passer de la position de travail à la position de transport, et inversement. Grâce à l'actionneur (13) et au dispositif de réglage de la pression (14), la pression de rappui au sol peut être adaptée de manière à obtenir un rappui similaire sur toute la largeur de travail.

A la lumière de la figure 3, le rouleau de rappui (105) est constitué de plusieurs tronçons (5a, 5b, 5c). Les tronçons voisins (5a, 5b) qui sont décalés s'étendent de part et d'autre des roues (3) dans cet exemple de réalisation. Le tronçon (5a) dispose d'une largeur couvrant six organes de semis (4) et le tronçon (5b) dispose d'une largeur couvrant quatre organes de semis (4). Le tronçon (5c) s'étend entre les roues (3) et dispose d'une largeur couvrant huit organes de semis (4). La disposition desdits tronçons (5a, 5b, 5c) est avantageusement symétrique par rapport au plan vertical médian du châssis (102). Le tronçon (5c) est décalé par rapport au tronçon (5b) dans la direction d'avance (A) mais ces deux tronçons (5b, 5c) ne sont pas voisins puisqu'ils sont séparés par les roues (3). Selon une alternative, les tronçons (5a et 5b) présente une largeur couvrant cinq organes de semis (4). Le tronçon (5c) pourra aussi être divisé en deux portions couvrant chacune quatre organes de semis (4). Les deux portions sont disposées entre les roues (3) et sont alignées.

Selon un exemple de réalisation non représenté, la bande de roulement (12) est remplacée par des couronnes équidistantes disposées sur l'âme cylindrique (10). Les couronnes sont fixées par soudage ou empilement sur la circonférence de l'âme cylindrique (10). Selon un autre exemple de réalisation, la bande de roulement (12) est pourvu d'un profil plat permettant un rappui identique sur toute la largeur de la bande de roulement (12).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir (1, 101) comportant un châssis (2, 102) s'appuyant sur le sol au moyen d'au moins deux roues (3) et portant un rouleau de rappui (5, 105) disposé transversalement à la direction d'avance (A) et des organes de semis (4) répartis sur toute la largeur de travail, le diamètre desdites roues (3) étant plus important que le diamètre dudit rouleau de rappui (5, 105), ***caractérisé en ce que*** ledit rouleau de rappui (5, 105) est constitué d'au moins deux tronçons directement voisins (5a, 5b ; 5b, 5c) qui sont disposés de manière décalée l'un par rapport à l'autre compte tenu de la direction d'avance (A).

2. Semoir selon la revendication 1, ***caractérisé en ce que*** le décalage entre lesdits tronçons (5a, 5b ; 5b, 5c), vu de dessus dans la direction d'avance (A), est partiel.

3. Semoir selon la revendication 1 ou 2, ***caractérisé en ce que*** le décalage entre lesdits tronçons (5a, 5b ; 5b, 5c), vu de dessus dans la direction d'avance (A), est inférieur à la moitié du diamètre dudit rouleau de rappui (5, 105).

4. Semoir selon l'une quelconque des revendications 1 à 3, ***caractérisé en ce que*** la largeur de chaque tronçon (5a, 5b, 5c) correspond au moins à la largeur desdites roues (3).

5. Semoir selon l'une quelconque des revendications 1 à 4, ***caractérisé en ce que*** lesdites roues (3) et lesdits tronçons (5a, 5b, 5c) dudit rouleau de rappui (5, 105) présentent le même profil.

6. Semoir selon l'une quelconque des revendications 1 à 5, ***caractérisé en ce que*** chaque tronçon (5a, 5b, 5c) présente une âme cylindrique (10) et une bande de roulement (12).

7. Semoir selon l'une quelconque des revendications 1 à 6, ***caractérisé en ce que*** lesdits tronçons (5a, 5b, 5c) s'étendent entre lesdites roues (3) lorsque ledit châssis (2) est rigide.

8. Semoir selon l'une quelconque des revendications 1 à 6, ***caractérisé en ce que*** lesdits tronçons (5a, 5b) s'étendent de part et d'autre desdites roues (3) lorsque ledit châssis (102) est repliable.

## Patentansprüche

1. Sämaschine (1, 101), die einen Rahmen (2, 102) umfasst, der sich mittels mindestens zweier Räder (3) auf dem Boden abstützt und eine Rückverfestigungswalze (5, 105) trägt, die quer zur Vorschubrichtung (A) angeordnet ist, und Säelemente (4), die über die gesamte Arbeitsbreite verteilt sind, wobei der Durchmesser der Räder (3) größer ist als der Durchmesser der Rückverfestigungswalze (5, 105), ***dadurch gekennzeichnet, dass*** die Rückverfestigungswalze (5, 105) aus mindestens zwei direkt benachbarten Abschnitten (5a, 5b; 5b, 5c) besteht, die unter Berücksichtigung der Vorschubrichtung (A) versetzt zueinander angeordnet sind.

2. Sämaschine nach Anspruch 1, ***dadurch gekennzeichnet, dass*** der Versatz zwischen den Abschnitten (5a, 5b; 5b, 5c) in Vorschubrichtung (A), von oben gesehen, teilweise ist.

3. Sämaschine nach Anspruch 1 oder 2, ***dadurch gekennzeichnet, dass*** der Versatz zwischen den Abschnitten (5a, 5b; 5b, 5c) in Vorschubrichtung (A), von oben gesehen, geringer als die Hälfte des Durchmessers der Rückverfestigungswalze (5, 105) ist.

4. Sämaschine nach irgendeinem der Ansprüche 1 bis 3, ***dadurch gekennzeichnet, dass*** die Breite jedes Abschnitts (5a, 5b, 5c) mindestens der Breite der Räder (3) entspricht.

5. Sämaschine nach irgendeinem der Ansprüche 1 bis 4, ***dadurch gekennzeichnet, dass*** die Räder (3) und die Abschnitte (5a, 5b, 5c) der Rückverfestigungswalze (5, 105) das gleiche Profil aufweisen.

6. Sämaschine nach irgendeinem der Ansprüche 1 bis 5, ***dadurch gekennzeichnet, dass*** jeder Abschnitt (5a, 5b, 5c) einen zylindrischen Kern (10) und eine Lauffläche (12) aufweist.

7. Sämaschine nach irgendeinem der Ansprüche 1 bis 6, ***dadurch gekennzeichnet, dass*** sich die Abschnitte (5a, 5b, 5c) zwischen den Rädern (3) erstrecken, wenn der Rahmen (2) starr ist.

8. Sämaschine nach irgendeinem der Ansprüche 1 bis 6, ***dadurch gekennzeichnet, dass*** sich die Abschnitte (5a, 5b, 5c) beidseits der Räder (3) erstrecken, wenn der Rahmen (102) klappbar ist.

## Claims

1. Seeder (1, 101) including a chassis (2, 102) resting on the ground by means of at least two wheels (3) and carrying a tamping roller (5, 105) positioned transversely relative to the direction of advance (A) and seeder elements (4) distributed across the overall working width, the diameter of said wheels (3) being greater than the diameter of said tamping roller (5, 105), ***characterised in that*** said tamping roller (5, 105) is comprised of at least two directly adjacent sections (5a, 5b; 5b, 5c) which are positioned in an offset manner relative to each other considering the direction of advance (A).

2. Seeder according to claim 1, ***characterised in that*** said sections (5a, 5b; 5b, 5c), viewed from above in the direction of advance (A), are partially offset.

3. Seeder according to claim 1 or 2, ***characterised in that*** the offsetting between said sections (5a, 5b; 5b, 5c), viewed from above in the direction of advance (A), is less than half of the diameter of said tamping roller (5, 105).

4. Seeder according to any one of the claims 1 to 3, ***characterised in that*** the width of each section (5a, 5b, 5c) corresponds at least to the width of said wheels (3).

5. Seeder according to any one of the claims 1 to 4, ***characterised in that*** said wheels (3) and said sections (5a, 5b, 5c) of said tamping roller (5, 105) have the same profile.

6. Seeder according to any one of the claims 1 to 5, ***characterised in that*** each section (5a, 5b, 5c) has a cylindrical core (10) and a tread (12).

7. Seeder according to any one of the claims 1 to 6, ***characterised in that*** said sections (5a, 5b, 5c) extend between said wheels (3) when said chassis (2) is rigid.

8. Seeder according to any one of the claims 1 to 6, ***characterised in that*** said sections (5a, 5b) extend either side of said wheels (3) when said chassis (102) is foldable.
